# EUROPEAN PATENT APPLICATION

(11) **EP 3 267 351 A1**
(43) Date of publication of application: **10.01.2018**
(21) Application number: 16305853.0
(22) Date of filing: 07.07.2016
(51) Int. Cl.: G06F 21/62, H04L 29/06, H04L 9/32

(54) **METHOD FOR SECURELY MANAGING A DOCKER IMAGE**

(71) Applicant: GEMALTO SA, 92190 Meudon (FR)
(72) Inventor: MOSSE, Franck, 13881 GEMENOS cedex (FR); MERLIN, Olivier, 13881 GEMENOS cedex (FR)

(57) **Abstract**

The invention is a method for securely managing a Docker image (10) which comprises a secure storage area (20) storing a data (30) encrypted with a keyset (45). The Docker image (10) comprises a secure driver (40). The method comprises the steps:
- the secure driver (40) retrieves the keyset (45) from a trusted store (50) only if incoming credentials (60) provided to the secure driver (40) match preset credentials (61),
- the secure driver (40) accesses the secure storage area (20) and deciphers said data (30) using the keyset (45), and
- the secure driver (40) sends said data (30) outside the Docker image (10).

## Description

### (Field of the invention)

The present invention relates to methods of securely managing a Docker image. It relates particularly to methods of securely managing a Docker image and the software containers generated from the Docker image.

### (Background of the invention)

Docker technology allows to define a piece of software in a container which contains everything it needs to run: code, runtime, system tools and system libraries for example. A software application defined in a Docker container can run based on an underlying operating system kernel. A container is created (instantiated) from a preset Docker image which acts as a data template. Containers isolate software applications from each other and the underlying infrastructure. Thus this container mechanism offers a first level of security.

Unfortunately, the executable program and data embedded in a Docker image could be easily accessible by a root user of the machine hosting the image.

There is a need for providing a security mechanism allowing to secure access to the content of a Docker image.

### (Summary of the Invention)

An object of the invention is to solve the above mentioned technical problem.

The object of the present invention is a Docker image which comprises a secure storage area storing a data encrypted with a keyset. The Docker image comprises a secure driver configured to retrieve the keyset from a trusted store only if incoming credentials provided to the secure driver match preset credentials. The secure driver is configured to access the secure storage area and to decipher said data using the keyset.

Advantageously, the Docker image may comprise the trusted store.

Advantageously, the secure driver may be configured to access the trusted store located outside the Docker image.

Advantageously, the Docker image may comprise both a second storage area storing plain data and a second driver adapted to access the second storage area.

Advantageously, the secure storage area may comprise configuration settings that are configured to automatically limit right of an unauthorized user to access a container instantiated from the Docker image.

Advantageously, said configuration settings may be adapted to define a default user profile which is devoid of right to parse and access the secure storage area of the instantiated container.

Advantageously, the secure driver may manage the secure storage area of the Docker image as a virtual file system.

Another object of the invention is a method for securely managing a Docker image. The Docker image comprises a secure storage area storing a data encrypted with a keyset. The Docker image comprises a secure driver. The method comprises the following steps:
- the secure driver retrieves the keyset from a trusted store only if incoming credentials provided to the secure driver match preset credentials,
- the secure driver accesses the secure storage area and deciphers said data using the keyset, and
- the secure driver sends said data (in a deciphered form) outside the Docker image.

Advantageously, the secure driver may access the trusted store which is located in the Docker image.

Advantageously, a host machine hosts the Docker image and the secure driver may access the trusted store which may be located in the host machine and outside the Docker image.

Advantageously, the method may comprise the further steps:
- a container is instantiated from the Docker image, said container comprising a secure storage area populated with the secure storage area of the Docker image,
- configuration settings coming from the secure storage area of the Docker image automatically limit right of an unauthorized user to access the secure storage area of said container.

Advantageously, said configuration settings may create a default user profile which is devoid of right to parse and access the secure storage area of the container.

Advantageously, the secure driver may access the trusted store which is located in the container.

### (Brief description of the drawings)

Other characteristics and advantages of the present invention will emerge more clearly from a reading of the following description of a number of preferred embodiments of the invention with reference to the corresponding accompanying drawings in which:
- Figure 1 shows a diagram of a Docker image according to an example of the invention,
- Figure 2 shows a diagram of a Docker container according to the invention,
- Figure 3 shows an exemplary flow diagram for managing a Docker image according to the invention, and
- Figure 4 shows an exemplary flow diagram for managing a Docker container according to the invention.

### (Detailed description of the preferred embodiments)

The invention may apply to any Docker image and container intended to be installed in a host machine. It is well-suited for any computer machine, like application server for instance, that embeds a Docker image.

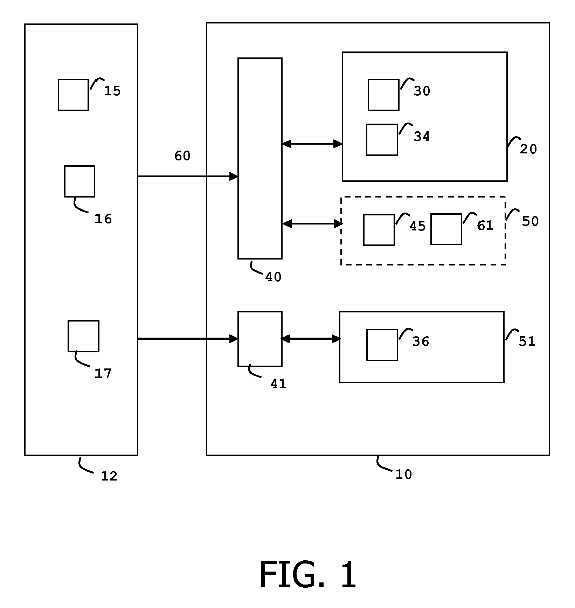

**Figure 1** shows an example of a diagram of a Docker image according to an example of the invention.

The Docker image 10 has been installed in a host machine (not shown) which embeds an operating system kernel 12. The Docker image 10 may be stored under the well-known tar format for instance.

The mechanisms provided by a conventional Docker-engine can be used to install the Docker image 10 and to create a container from the Docker image 10.

In this example, the kernel 12 is a Linux ® or Linux-like kernel. The kernel 12 comprises a FUSE (Filesystem in USErspace) API 16 (Application Programming Interface) which works with a secure driver located in the user space (i.e. above the kernel) and is assumed to be designed to manage a filesystem. The secure driver is in charge of storing, organizing and generally taking care of data represented as files and directories.

The kernel 12 comprises another API 17 which may be an Ext3 (third extended filesystem) API. The Ext3 API is a journaled file system commonly used by the Linux kernels. The API 17 allows to interact with a mount point whose file system is ext3.

The kernel 12 comprises a VFS (Virtual File System or Virtual Filesystem Switch) 15 which is an abstraction layer on top of a more concrete file system. The purpose of the VFS is to allow client applications to access different types of concrete file systems in a uniform way. A VFS can, for example, be used to access local and network storage devices transparently. (I.e. without having to know what type of file system is accessed.)
The VFS specifies an interface between the kernel 12 and a concrete file system which is intended to be embedded in the image 10 (or in a container instantiated from the image 10).
The VFS is able to receive a command from an application located in the userspace (i.e. outside the kernel 12) and to select the relevant driver entry point according to the targeted storing entity (via the declared mount point associated to the targeted storing entity). Assuming that the content of the image 10 has been regularly declared in the VFS, the VFS can trigger either the FUSE API 16 or the Ext3 API 17 according to the targeted data stored in the image 10.

The Docker image 10 comprises a secure storage area 20 and another storage area 51. The content of the secure storage area 20 is enciphered with a keyset 45 while the content of the storage area 51 is not enciphered. More precisely, the secure storage area 20 may comprise a first data 30 and configuration settings 34 while the storage area 51 may comprise a plain data 36.

In the example of Figure 1, the Docker image 10 comprises a trusted store 50 (shown in dotted line) which stores the keyset 45 and preset credentials 61.

The Docker image 10 comprises a secure driver 40 designed to work with the FUSE API 16 and a second driver 41 designed to work with the Ext3 API 17.

The secure driver 40 is adapted to get incoming credentials 60 provided by the kernel 12 and to retrieve the keyset 45 from the trusted store 50 only if the incoming credentials 60 match the preset credentials 61. The secure driver 40 is adapted to access and manage the content of the secure storage area 20 using the keyset 45.

The driver 41 is adapted to access and manage the content of the storage area 51.

In the present document, the wording "match" encompass the following embodiments.

In a first variant, the secure driver 40 provides the trusted store 50 with the incoming credentials 60 and the trusted store 50 checks that the incoming credentials 60 correspond to the preset credentials 61. For instance, the trusted store 50 may check that the incoming credentials 60 is equal to the preset credentials 61.

In a second variant, the preset credentials 61 are stored in the secure driver 40 which checks that the incoming credentials 60 correspond to the preset credentials 61 and in case of successful checking retrieves the keyset 45.

In a third variant, the keyset 45 is enciphered with a specific key stored in the secure driver 40. The secure driver 40 checks that the incoming credentials 60 correspond to the preset credentials 61 and in case of successful checking retrieves the keyset 45 and deciphers the keyset 45 using the specific key.

The trusted store 50 may be implemented in a pure software solution like a wallet or a key store.

The trusted store 50 may also be stored outside the Docker image 10. In one example, the trusted store 50 may be installed in the host machine which embeds the Docker image 10. For instance, the trusted store 50 may be a Java Key store (JKS) which is copied in the file system of the host machine.

In another example, the trusted store 50 may be stored in a hardware device connected to the host machine. For instance, the trusted store 50 may be stored in a tamper-resistant device (like a smart card), a contactless token, a USB token, a smartphone, a tablet, a wearable device (like a smart watch or a ring) or a secure element embedded in the host machine (like a secure element embedded in a car).

Although Figure 1 shows an image 10 comprising a storage area 51, the Docker image 10 may not have a storage area 51 (and be devoid of the second driver 41). In this case, the image 10 includes the secure storage area 20 and may include the trusted store 50.

The kernel 12 may be able to run in Windows environment, Mac OS environment or Linux-like system.

The above-presented API 17 (included in the kernel 12) may use technology different from Ext3 like NFS or Ext4 for example. In this case, the driver 41 is designed accordingly.

The API 16 may be different from a FUSE API. For example the API may be based on ext3 with a security additional layer in charge of ciphering/deciphering the file system.

Advantageously, the secure driver 40 manages the secure storage area 20 as a virtual file system.

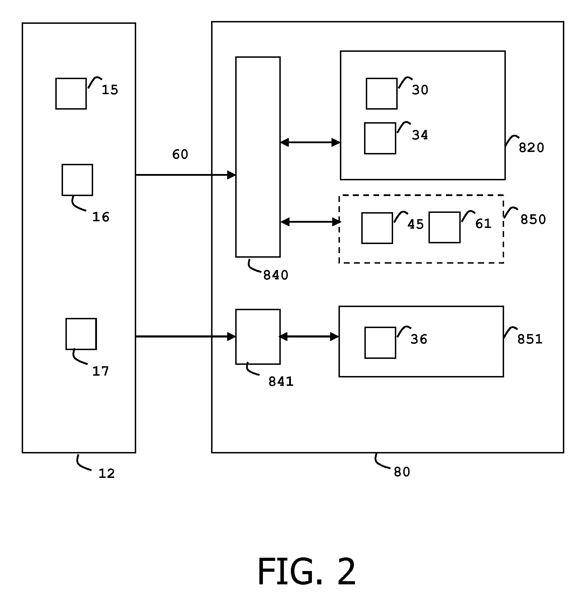

**Figure 2** shows an example of a Docker container according to the invention.

In this example, the Docker container 80 has been instantiated from the Docker image 10 of Figure 1.

The kernel 12 is the same as the kernel described at Figure 1.

The Docker container 80 comprises a secure storage area 820 and another storage area 851 which is optional. The content of the secure storage area 820 is enciphered with the keyset 45 while the content of the storage area 851 is not enciphered. More precisely, the secure storage area 820 comprises the first data 30 and the configuration settings 34 while the storage area 851 comprises the plain data 36. The content of the secure storage area 820 may be enciphered with a key different from the key used to encipher the secure storage area 20. Alternatively, they can be both enciphered with the same key.

The Docker container 80 may comprise a trusted store 850 (shown in dotted line) which stores the keyset 45 and preset credentials 61. Alternatively the trusted store 850 may be located outside the Docker container 80 similarly to the previously described trusted store 50. In another embodiment, the trusted store 850 may be the trusted store 50 of the image 10. In this case, the container does not comprise its own trusted store.

The Docker container 80 comprises a secure driver 840 designed to work with the FUSE API 16 and a second driver 841 designed to work with the Ext3 API 17. Preferably, the secure driver 840 is the same as the secure driver 40. (I.e. same code)

The secure driver 840 is adapted to get incoming credentials 60 provided by the kernel 12 and to retrieve the keyset 45 from the trusted store 850 only if the incoming credentials 60 match the preset credentials 61. The driver 40 is adapted to access and manage the content of the secure storage area 820 using the keyset 45.

The driver 841 is adapted to access and manage the content of the storage area 851.

Similarly to variants described at Figure 1, the checking of credentials may be performed by either the driver 840 or by the trusted store 850.

Since several containers may be instantiated from the same Docker image, these containers may share the same trusted store 850 embedded in a tamper-resistant hardware module.

Although Figure 2 shows a container 80 comprising a storage area 851, the Docker container 80 may be devoid of the storage area 851 (and of the driver 841).

The APIs 16 and 17 may use other technologies as mentioned for the Docker image 10.

Advantageously, the configuration settings 34 may be designed to automatically limit right of an unauthorized user to access the container 80. For example, the configuration settings 34 may be designed to define a default user profile which is devoid of right to parse and access the secure storage area 820.

Thanks to the configuration settings 34, the container 80 is configured so that when connecting to the container 80 an external user becomes automatically an internal user having the default user profile.

The following example allows to create a 'guest' user that have limited access rights inside a debian image:

```
     # install the adduser command in the image
     RUN apt-get -y install adduser groupadd
     # create the guest group
     RUN groupadd guest
     # create the guest user
     RUN adduser -shell /bin/false -gecos "" -disable-
     password -g guest guest
      # Switch by default to guest user
     USER guest
     # define user environment variables
     ENV HOME /home/guest
      ENV USER guest
     # Position the guest user inside its own directory
    WORKDIR /home/guest
```

In this way, when the root user connects to the container 80 he becomes automatically (by default) the internal guest user with limited privileged and without possibility to become root user inside the container 80.

The Docker image of Figure 1 and the Docker container 80 are stored in the non-volatile memory of the host machine, for example on a hard disk drive (HDD) or Solid-state drive (SSD). A processor of the host machine runs the kernel 12 and runs the process of image installation and container instantiation. When the container comprises a software application, the processor of the host machine runs this software application (it also said that the host machine runs the container).

The host machine may be a laptop, a server machine, a phone, a gaming machine or any computer able to run a Docker container.

The data stored in the secure storage areas 20 and 820 may be any kind of data: script, source code, executable code, applicative data, secret data, certificate, configuration files, configuration settings, etc.

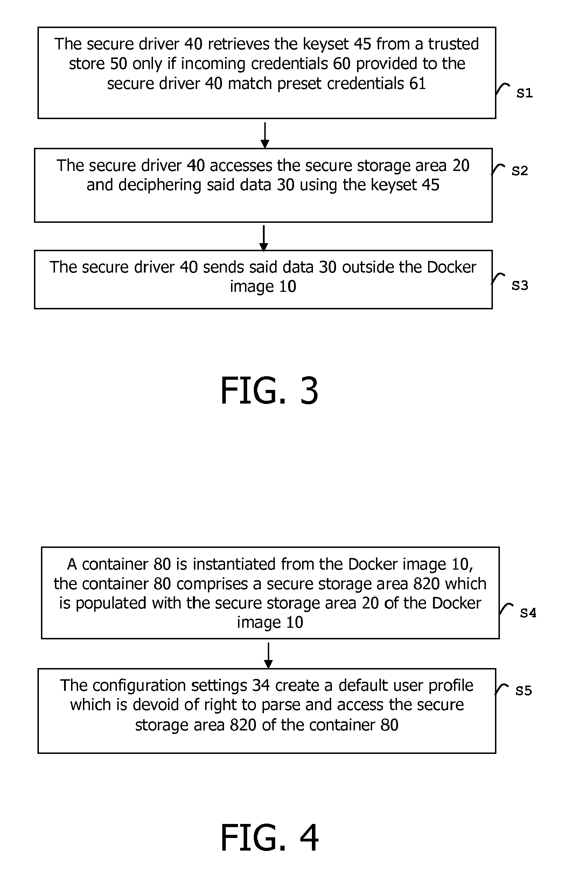

**Figure 3** shows an example of a flow diagram for managing a Docker image according to the invention.

The method for securely managing a Docker image according to the invention is a computer-implemented method.

Assuming that a Docker image 10 according to the invention was installed on a host machine, the kernel 12 receives a request to send incoming credentials 60 to the image 10. The incoming credentials 60 may come from another application (or a command line) aiming at reading data stored in the secure storage area 20 of the image 10.

The API 16 of the kernel 12 sends the incoming credentials 60 to the secure driver 40.

Then the secure driver 40 retrieves the keyset 45 from the trusted store 50 only if the incoming credentials match preset credentials which may be stored either in the secure driver 40 or in the trusted store 50. (step S1)

Then the secure driver 40 accesses the secure storage area 20 and deciphers the targeted data using the keyset. (step S2)

Then the secure driver 40 sends the deciphered data outside the Docker image to the API 16 which in turn route the data to the requesting application.

Similarly, a writing command may be sent to the secure driver 40 which enciphers the incoming data and writes the ciphered data into the secure storage area 20.

The Docker image 10 is assumed to have been generated so that it embeds the binary of secure driver 40. The file system must be mounted during the building of the image 10. The files comprising the preset credentials 16 and the keyset 45 must be provisioned when the image 10 is built. All access to the mounting point is automatically enciphered during the building of the image 10.

**Figure 4** shows an example of a flow diagram for managing a Docker container according to the invention.

Assuming that a Docker image 10 according to the invention was installed on a host machine, incoming credentials 60 are presented to the secure driver 40 in order to read the configuration settings 34 stored in the secure storage area 20 of the image 10.

A new container 80 is instantiated from the Docker image 10 thanks to usual Docker instantiation process.

The container 80 comprises its own secure storage area 820 which is populated with the content of the secure storage area 20 of the Docker image 10. (Step S4)

Then configuration settings 34 which are stored in the secure storage area 820 of the Docker container 80 are automatically triggered to limit right of an unauthorized user to access the secure storage area 820 of the container 80. For example, the configuration settings 34 may create a default user profile which is devoid of right to parse and access the secure storage area 820 of the container. (Step S5)

The invention is well-suited for enhancing the security of applications deployed on the cloud architecture. The access to the sensitive content of the Docker image is secured by the secure driver which use a keyset stored in a protected area. Only the secure driver can access the keyset stored in the trusted store.

The keyset may be limited to a single key or may comprise several keys which may be allocated to different parts of the secure storage area.

The credentials 60 may be a password or a PIN allowing to grant access to the trusted store 50 for example.

Thanks to the invention, the Docker image is self-protected.

An advantage of the invention is to be independent of any external security layer or mechanism. In particular, the invention does not rely on any additional security layer to be installed on the host machine.

The invention is not limited to the described embodiments or examples. In particular the features described in the above-presented examples and embodiments may be combined.

## Claims

1. A **Docker image** (10), **characterized in that** said Docker image (10) comprises a secure storage area (20) storing a data (30) encrypted with a keyset (45), **in that** the Docker image (10) comprises a secure driver (40) configured to retrieve said keyset (45) from a trusted store (50) only if incoming credentials (60) provided to the secure driver (40) match preset credentials (61) and **in that** the secure driver (40) is configured to access the secure storage area (20) and to decipher said data (30) using the keyset (45).

2. A Docker image (10) according to claim 1, wherein the Docker image (10) comprises the trusted store (50).

3. A Docker image (10) according to claim 1, wherein the secure driver (40) is configured to access the trusted store (50) located outside the Docker image (10) .

4. A Docker image (10) according to claim 1, wherein the Docker image (10) comprises both a second storage area (51) storing plain data (36) and a second driver (41) adapted to access the second storage area (51) .

5. A Docker image (10) according to claim 1, wherein the secure storage area (20) comprises configuration settings (34) configured to automatically limit right of an unauthorized user to access a container (80) instantiated from the Docker image (10).

6. A Docker image (10) according to claim 5, wherein said configuration settings (34) are adapted to define a default user profile which is devoid of right to parse and access the secure storage area (820) of the instantiated container (80).

7. A Docker image (10) according to claim 1, wherein the secure driver (40) manages the secure storage area (20) of the Docker image (10) as a virtual file system.

8. A **method** for securely managing a Docker image (10) ,
**characterized in that** said Docker image (10) comprises a secure storage area (20) storing a data (30) encrypted with a keyset (45), **in that** the Docker image (10) comprises a secure driver (40) and **in that** the method comprises the following steps:
- the secure driver (40) retrieves the keyset (45) from a trusted store (50) only if incoming credentials (60) provided to the secure driver (40) match preset credentials (61),
- the secure driver (40) accesses the secure storage area (20) and deciphers said data (30) using the keyset (45) ,
- the secure driver (40) sends said data (30) outside the Docker image (10).

9. A method according to claim 8, wherein the secure driver (40) accesses the trusted store (50) which is located in the Docker image (10).

10. A method according to claim 8, wherein a host machine hosts the Docker image (10) and wherein the secure driver (40) accesses the trusted store (50) which is located in the host machine and outside the Docker image (10).

11. A method according to claim 8, wherein the method comprises the further steps:
- a container (80) is instantiated from the Docker image (10), said container (80) comprising a secure storage area (820) populated with the secure storage area (20) of the Docker image (10),
- configuration settings (34) which are stored in the secure storage area (20) of the Docker image (10) automatically limit right of an unauthorized user to access the secure storage area (820) of said container (80) .

12. A method according to claim 11, wherein said configuration settings (34) create a default user profile which is devoid of right to parse and access the secure storage area (820) of the container (80).

13. A method according to claim 11, wherein the secure driver (40) accesses the trusted store (850) which is located in the container (80).
